**Europäisches Patentamt**

**European Patent Office**

**Office européen des brevets**

(19)

(11) Veröffentlichungsnummer: **0 061 147**

**A1**

(12)

# EUROPÄISCHE PATENTANMELDUNG

(21) Anmeldenummer: **82102184.7**

(22) Anmeldetag: **17.03.82**

(51) Int. Cl.³: **C 08 K 3/08**
**B 29 C 29/00, C 08 J 11/04**

(30) Priorität: **17.03.81 DE 3110254**
**09.09.81 DE 3135716**
**18.12.81 DE 3150352**

(43) Veröffentlichungstag der Anmeldung:
**29.09.82 Patentblatt 82/39**

(84) Benannte Vertragsstaaten:
**AT BE CH DE FR GB IT LI NL SE**

(71) Anmelder: **Ries, Walter**
**Von-Salza-Strasse 60**
**D-6990 Bad Mergentheim(DE)**

(72) Erfinder: **Ries, Walter**
**Von-Salza-Strasse 60**
**D-6990 Bad Mergentheim(DE)**

(72) Erfinder: **Rudolf, Manfred**
**Friedrich-Spee-Strasse 10**
**D-8700 Würzburg(DE)**

(74) Vertreter: **Pätzold, Herbert, Dr.-Ing.**
**Mühlthaler Strasse 102**
**D-8000 München 71(DE)**

(54) **Verwendung von Abfallstoffen zur Herstellung von Füllstoffen für Kunststofformkörper.**

(57) Aluminium PVC-Abfallfolien, insbesondere der Pharmaindustrie, werden zur Herstellung von Füllstoffen für Kunststofformkörpern verwendet.

EP 0 061 147 A1

Verwendung von Abfallstoffen
zur Herstellung von Füllstoffen für Kunststofformkörper

---

Die Erfindung bezieht sich auf die Verwendung von Abfallstoffen zur Herstellung von Füllstoffen für Kunststofformkörper. Die Erfindung bezieht sich darüber hinaus auf
die Kunststofformkörper, die solche Füllstoffe enthalten
sowie auf Verfahren zur Herstellung solcher Kunststoffformkörper.

Es ist bekannt, billige und kostengünstige Füllstoffe
in das Kunststoffrohmaterial einzumichen, aus dem bestimmte Kunststofformkörper hergestellt werden können,
um dadurch Rohmaterialkosten einzusparen. Da aber durch
den Einsatz von Füllstoffen die physikalischen Eigenschaften eines Kunststofformkörpers im Vergleich zu dem entsprechenden Kunststofformkörper ohne solche Füllstoffe
geändert werden und solche Änderungen sich z.B. auf
Elastizität, Kerbschlagzähigkeit, Witterungsbeständigkeit negativ auswirken können, ist bei bestimmten Kunststofformkörpern ein Zusatz von Füllstoffen untersagt
bzw. nicht zulässig.

Es gibt jedoch eine große Anzahl von Formkörpern aus
Kunststoff, wo der Einsatz von Füllstoffen zulässig
und zur weitgehendsten Einsparung von Rohöl in der Zukunft auch geboten sein wird. Zu solchen Kunststoffformkörpern gehören die verschiedensten Arten von im
Preßverfahren hergestellten Platten, z.B. Fußbodenplatten für Flächenheizungen, Schalungskörper, Trennwände,
plattenförmige Bauteile für den Möbelbau usw. Weiterhin
kann es sich auch um Kunststoffolien handeln, die Füllstoffe enthalten.

Bei Kunststofformkörpern, die im Extrusionsverfahren hergestellt werden und die Füllstoffe enthalten können, handelt es sich z.B. um runde Rohre, vor allem drucklose Schutzrohre, Rechteckrohre als Lüfterrohre, verschiedenartige Bauprofile, wie z.B. Kantenschutzprofile, Handlaufprofile, Anschlußprofile, Leisten, wie Unterputzleisten, Profilleisten zur Aufnahme von Kabelsträngen, Gardinenleisten, Sockelleisten, ferner Treppenwangen und dergleichen mehr.

Bei den Kunststofformkörpern, die im Spritzgußverfahren hergestellt sind, und die Füllstoffe enthalten können, handelt es sich um die verschiedensten Formstücke und Formteile, wie z.B. Abstandshalter für Rohre und Kabel, Abstandshalter für Betonbewehrungsmatten, Spritzkörper für Schalungen, Fittings für Rohrleitungen, Rohrverzweigungen, Muffen und dergleichen mehr.

Bei den vorstehend näher bezeichneten Kunststofformkörpern handelt es sich je nach ihrer Herstellungsart nur um eine beispielsweise Auswahl, die jedoch den Rahmen der Erfindung in keiner Weise beschränkt. Die Erfindung umfaßt vor allem solche Formkörper aus Kunststoff nicht, bei denen die Verwendung von Füllstoffen untersagt ist. Mit anderen Worten betrifft die Erfindung ohne Einschränkung solche Kunststofformkörper, bei denen der Einsatz von Füllstoffen zulässig oder geboten ist.

Aufgabe der Erfindung ist es nun, einen Füllstoff aufzufinden, der in Produktionsbetrieben in größeren Mengen als nicht weiterverwendbarer Abfall anfällt, also Abnehmern praktisch kostenlos zur Verfügung gestellt werden kann, wobei eine kosten- und energieaufwendige Abfallbeseitigung für den Produktionsbetrieb entfällt.

Durch den Füllstoff sollen aber nicht nur Rohstoffkosten gespart, sondern auch die Möglichkeit gegeben sein, be-

3

stimmte physikalische Eigenschaften der Kunststofformkörper gezielt verbessern zu können.

Die vorstehende Aufgabe wird dadurch gelöst, daß erfindungsgemäß vorgeschlagen wird, Alu-PVC-Abfallfolien, insbesondere der Pharmaindustrie zur Herstellung von Füllstoffen für Kunststoffkörper zu verwenden.

Die Erfindung umfaßt weiterhin Kunststofformkörper, die
solche Füllstoffe enthalten und Verfahren zur Herstellung solcher Kunststofformkörper. Insoweit wird auf die
Unteransprüche und die nachfolgende Beschreibung verwiesen.

Für den Abfall-Recyclingfachmann war es überraschend, daß
sich Alu-PVC-Abfallfolien erfindungsgemäß leicht aufbereiten lassen, um einen besonders preisgünstigen Füllstoff für verschiedenartige Produkte aus Kunststoff zu
erhalten. Für den Produktionsfachmann, in dessen Betrieb
die Alu-PVC-Abfallfolien z.B. als Abfallfolienstanzreste
und Leerblister in größeren Mengen anfallen, war es
gleichfalls überraschend, daß der Abfall verwertbar ist
und nicht länger mehr ein Entsorgungsproblem darstellt.

Schließlich war es für den Kunststoff-Fachmann überraschend, zu besonders preisgünstigen Bedingungen ein Rohmaterial zur Herstellung eines Füllstoffes zu erhalten,
durch den gewisse Kunststoffprodukte wesentlich preisgünstiger hergestellt werden können und wobei aufgrund der
Aluminiumeinschlüsse vorteilhafte Eigenschaften erzielt
werden. Hierzu gehören nicht nur die besondere Oberflächenstruktur, die den erfindungsgemäßen Produkten ein besonderes Aussehen verleihen, sondern unter anderem auch
fehlende oder doch wesentlich verringerte elektrostatische Aufladbarkeit, erhöhte Wärmeleitfähigkeit, erhöhter
Schutz gegen energiereiche Strahlen und verbesserte Erwärmungs- und Verflüssigungseigenschaften.

Es ist hinlänglich bekannt, daß an vielen großflächigen Kunststoffen, wie Folien und Bodenbelegen, durch Reibungen elektrostatische Aufladungen auftreten, die bei Annäherung von leitfähigen Gegenständen zu Funkenentladungen führen können. Durch den erfindungsgemäß vorgeschlagenen neuen Füllstoff ist ein besonders einfacher Weg gezeigt, aufgrund der Aluminiumeinschlüsse in den Kunststoffprodukten, elektrostatische Aufladungen weitgehend zu vermeiden.

Die durch die Aluminiumeinschlüsse in den Kunststoffen erhöhte Wärmeleitfähigkeit ist vor allem bei Fußbodenplatten zum Bau von Flächenheizungen besonders vorteilhaft, da siedie Wärme besser übertragen. Weiterhin ist von Vorteil, daß durch die Aluminiumteilchen die Wärme zur Herstellung der Kunststoffprodukte besonders rasch und gleichmäßig verteilt wird, und daß gerade an den Kontaktflächen der Aluminiumteilchen Temperaturspitzen auftreten, die gewährleisten, daß sie eine innige Bindung mit dem aufgeschmolzenen Kunststoff eingehen.

Im Vergleich mit entsprechenden Kunststoffprodukten herkömmlicher Art ohne solche Aluminiumeinschlüsse zeigt sich, daß bei diesen zu ihrer Verflüssigung ein höherer Energieverbrauch erforderlich ist als bei erfindungsgemäßen Kunststoffprodukten mit Aluminiumeinschlüssen.

Die Erfindung wird anhand von Ausführungsbeispielen mehr im einzelnen beschrieben.

Erfindungsgemäße Kunststofformkörper sind dadurch gekennzeichnet, daß der Füllstoff aus zerkleinerten Alu-PVC-Abfallfolien besteht.

Zur Herstellung von gepreßten Platten, insbesondere Fußbodenplatten für Flächenheizungen, kann der Anteil an zerkleinerten Alu-PVC-Abfallfolien als Füllstoff bis zu etwa 90 Gew.-% betragen. Die Platten können z.B. eine Dicke von ca. 10 - 15 mm aufweisen. Vorteilhafterweise werden dem Alu-PVC-Füllstoff 8 bis 10 Gew.-% eines Polyurethans als Bindemittel, z.B. in Pulver-oder Granulatform, zugemischt.

Für die Fachwelt es es erstaunlich, mit einem derart hohen Anteil von bis zu 90 Gew.-% Alu-PVC-Füllstoff und nur 8 bis 10 Gew.-% Bindemittel eines Thermoplastes Platten für Fußbodenheizungen als Ersatz für den herkömmlichen schwimmenden Estrich zu erhalten, wobei die Platten bei vergleichsweise geringen Herstellungskosten eine hohe Wärmeleitfähigkeit besitzen. Die zerkleinerten Alu-PVC-Folien werden vorteilhafterweise auf ein 6 bis 8 mm Sieb gegeben. Der Siebdurchgang mit etwa 3 bis 4 mm großen Teilchen wird mit dem Polyurethan intensiv gemischt und dann in einer Presse zu Platten verpreßt, wobei der Preßvorgang mit oder ohne erhöhter Temperatur vor sich gehen kann. Der Siebdurchgang von entsprechend größermaschigen Sieben kann auch bis zu 10 mm betragen.

Eine weitgehend homogene Vermischung der zerkleinerten Alu-PVC-Abfallfolien mit dem Bindemittel ist für die Qualität der gepreßten Platte wesentlich.

Hierzu werden die zerkleinerten Alu-PVC-Abfallfolien vorteilhafterweise mit einem Bindemittel, Weichmacher und Verarbeitungshilfsmitteln gemischt. Aus dem Gemisch wird in bekannter Weise ein Walzfell hergestellt, das anschließend zerkleinert und dann zu Platten verpreßt wird. Bei dem Bindemittel handelt es sich vorteilhafterweise um ein handelsübliches Hart-PVC in Pulver- oder Granulatform.

Die Preßplatten können außer für Fußbodenplatten als Befestigungsplatten oder glatte oder strukturierte Schalungsauflageplatten dienen.

Die vorstehende Plattenherstellung kann erfindungsgemäß auch noch weiter dadurch modifiziert werden, daß zusätzlich anorganische Füllstoffe, wie Gesteinsmehl, Quarzmehl oder Keramikmehl zugegeben werden. Der anorganische Füllstoff, der Abfallfolien-Füllstoff und das Bindemittel, z.B. auf der Basis von Polyurethan, werden intensiv gemischt und anschließend z.B. zu Platten verpreßt. Die so hergestellten Platten können z.B. als Fassadenplatten oder Bodenplatten geeignet sein. Der Anteil an anorganischem Füllstoff kann bis zu 90 Gew.-% der Platte ausmachen.

Zerkleinerte Alu-PVC-Abfallfolien können erfindungsgemäß auch Holzspänen zur Herstellung von Spanplatten zugemischt werden. Die auf ein Bett aufgeschichteten Späne mit den zugemischten zerkleinerten Alu-PVC-Abfallfolien werden zwischen Preßplatten heiß verpreßt. Wegen der hohen Wärmeleitfähigkeit der Alu-Folien-Teilchen wird das PVC zwischen den Holzspänen aufgeschmolzen und verbindet sich intensiv mit den Holzspänen und den Alu-Folienteilchen zu einer festen Spanplattenmasse. Auch hier tragen die Alu-Folienabschnitte zwischen den Holzspänen dazu bei, daß mit relativ geringem Wärmeaufwand das PVC sicher zum Schmelzen gebracht wird. Sollte das PVC der Abfallfolien nicht ausreichen, wird ein originäres PVC-Granulat als zusätzliches Bindemittel oder ein entsprechendes Bindemittel zugegeben.

Zur erfindungsgemäßen Herstellung von spritzgegossenen Formstücken und Formteilen, wie z.B. Abstandshalter für Rohre und Kabel, Abstandshalter für Betonbewehrungsmatten, Spreizkörper für Schalungen, Fittings für Rohrleitungen, Rohrverzweigungen, Muffen und dergleichen Formteile werden zerkleinerte Alu-PVC-Abfallfolien und pulverförmiges, weichmacherfreies, stabilisiertes PVC mit einem K-Wert von ca. 50 gemischt und anschließend granuliert.

7

Bei der Spritzgußverarbeitung müssen die Zylindertemperaturen so gewählt werden, daß einerseits optimale Homogenisierung und Plastifizierung erreicht werden, andererseits aber nur kurze Verweilzeiten erreicht werden, um thermische Schädigung des Materials auszuschließen. Der Einspritzdruck kann zwischen 800 - 1600 bar betragen, die richtige Einstellung des Staudruckes ist wegen der thermischen Empfindlichkeit des Materials sehr wichtig. Wärme aus der Friktion der Schnecke, die wegen des Aluminiumanteiles rasch im Material verteilt wird, ist besser als aus den Zylinderheizbändern.

Die Einspritzgeschwindigkeit sollte so gewählt werden, daß das Material nicht geschert wird. Die Schneckendrehzahl ist so gering wie möglich zu wählen.
Aufgrund der Zusammensetzung des Materials ist bei der Spritzgußverarbeitung Stangenanguß besonders geeignet. Die Wanddicken der Fertigteile dürfen nicht zu klein sein, es empfiehlt sich, mit Wanddicken größer 4 mm zu arbeiten. Die geometrische Gestalt der Teile sollte möglichst einfach sein, um unnötige Scherung des Materials zu vermeiden. Der prozentuale Anteil von Alu-PVC zu PVC kann in weiten Grenzen etwa von 80 bis 20 % variiert werden.

Ein Probenkörper aus einer Mischung von Alu-PVC mit PVC (Typ Trosiplat-Schwarz) im Verhältnis 50 : 50 zeigt folgende Eigenschaften:

| | |
|---|---|
| Elastizitätsmodul | 2.900 N/mm$^2$ |
| Streckspannung | 42 N/mm$^2$ |
| Reißfestigkeit | 34 N/mm$^2$ |
| Dehnung an der Streckgrenze | 5 % |
| Reißdehnung | 9 % |
| Kerbschlagzähigkeit | 6 mJ/mm$^2$ |
| Vicat-Erweishungstemperatur | VST/B/50 = 73$^{\circ}$C |

Der mit Hilfe des Glührückstandes ermittelte Füllstoffgehalt des Materials betrug ca. 7 %.

Das Verhältnis von Alu-PVC-Füllstoff zu PVC-Binder (PVC-Hart) von 50 : 50 sollte nicht überschritten werden, weil sonst die Spritzgußverarbeitung auf Schwierigkeiten stoßen kann.

Zur Herstellung von extrudierten Bauprofilen, wie Rohren, Stangen, Leisten (Fußbodenleisten, Anschlußprofile, Unterputzleisten, Handlaufprofile, Stoßkanten, Kantenschutzprofile, Gardinenleisten, Sockelleisten) kann der Anteil an Alu-PVC-Füllstoff bis zu 60 Gew.-% gewählt sein.

Rohre können z.B. mit 100 mm Durchmesser und Rechteckprofilrohre können z.B. mit Abmessungen 50 x 20 mm extrudiert werden. Mischungen von Alu-PVC-Füllstoff zu PVC-Binder (PVC-Hart) im Verhältnis von 50 : 50 Gewichtsteilen lassen sich gut verarbeiten. Durch Änderung von Gleitmittel und Verarbeitungshilfsmittel kann der Gehalt an Alu-PVC-Füllstoff auch bis auf etwa 60 Gewichtsteile erhöht werden. Hier muß gegebenenfalls durch Zusatz einer Komponente zur Erhöhung der Schlagzähigkeit dem Abfall der Kerbschlagzähigkeit begegnet werden.

Der Einsatz von extrudierten Rohren ist z.B. in der Landwirtschaft als drucklose Schutzrohre für Bewässerungen und dergleichen möglich. Die Rechteckrohre können zum Aufbau von Lüfteranlagen dienen.

Als Bindemittel kommen außer PVC, insbesondere PVC-Hart und Polyurethan auch Kunststoffe auf Polyester-, Polyäthylen- und Polystyrolbasis in Frage.

Zur Verwendung von zerkleinerten Alu-PVC-Abfallfolien als Füllstoff für im Extrudierverfahren oder Spritzgußverfahren herzustellenden Kunststoffprodukten ist es vorteilhaft, einen granulierten Füllstoff zur Verfügung zu haben, der mit Bindemittelgranulat gemischt wird, um einen Rohstoff für die Extrudier- oder Spritzgußverfahren zur Verfügung zu haben.

Hierzu werden die zerkleinerten Alu-PVC-Abfallfolien erfindungsgemäß mit oder ohne Zusatz eines Bindemittels in der Schmelzphase homogenisiert, entgast und anschließend granuliert. Für derartige Granulierverfahren sind sogenannte Plastkompaktoren bekannt.

Zur Herstellung von Folien aus Alu-PVC-Füllstoffgranulat und PVC-Bindemittel kann der Füllstoffanteil bis zu 60 % betragen. Als PVC-Bindemittel wird vorzugsweise S-PVC mit einem K-Wert von ca. 60 - 70 eingesetzt.

Die Folienherstellung erfolgt auf bekannte Weise, wobei Füllstoff, Bindemittel, Stabilisierungsmittel und eventuell Weichmacher in einem Vormischer heiß gemischt und anschließend abgekühlt werden. Durch anschließende Mischungsaufbereitung mit Knet- und Walzwerk erfolgt in bekannter Weise eine Compoundierung mit abschließender Folienformung im Walzenkalander.
Die im Walzenspalt und dem Knetwerk herrschenden Strömungsverhältnisse bedingen eine erhebliche Scherung der Schmelze und damit eine Wärmeerzeugung. Die Zufuhr von Wärme kann für ein Material, wie es PVC-Bindemittel mit Alu-PVC-Füllstoff darstellt, problematisch sein. Um insoweit Schwierigkeiten zu vermeiden, kann mit der Kalandriergeschwindigkeit zurückgegangen werden. Aus diesem Aspekt ergibt sich eine Geschwindigkeit des nachgeschalteten Wicklers von ca. 40 bis 60 m/min.

Zur Extrusion von Alu-PVC-Füllstoff und PVC-Hart-Bindemittelgemischen kann auch ein verarbeitungsfähiges Dryblend in einem Heiz-Kühl-Mischer hergestellt werden.

Als Grundmischung wird ein S-PVC mit einem K-Wert von ca. 65 eingesetzt. Die Stabilisierung besteht aus 3-basischem Bleisulfat (ca. 1,5 - 3 Gew.-Anteile); 2-basischem Bleistearat (1 - 2 Gew.-Anteile); Calciumstearat (bis 1 Gew.-Anteil) und Montanwachs ( bis 0,1 Gew.-Anteil).

Der Anteil von Alu-PVC-Abfallfolien kann bis zu 60 Gew.-
Anteilen betragen, wobei aufgrund der besseren Dispergierung möglichst feinpulveriges Alu-PVC eingesetzt werden soll. Zur besseren Dispergierung wird der Füllstoff
erst bei 80°C in den Mischer gegeben und anschließend
bis etwa 120°C weitergemischt.

Das so gewonnene Dryblend kann auf Einschneckenextrudern verarbeitet werden.

Bei Drehzahlen von 10 bis 30 UpM ergibt sich ein Ausstoß
von ca. 1,5 bis 2,0 m/min, wobei von einem einfachen,
rechteckigen Profilquerschnitt ausgegangen wird.

Aufgrund der guten Wärmeleitung des Materials ist bei der
Extrusion darauf zu achten, daß die Temperaturen der Heizzonen bzw. des Werkzeuges 160°C nicht überschreiten. Die
so gewonnenen Profile zeigen einen mit Alu-Teilchen angereicherten Profilquerschnitt, der dadurch metallartiges Aussehen besitzt.

Vorstehend wurde davon ausgegangen, daß es sich um Alu-
PVC-Abfallfolien handelt, die zu Füllstoffen verarbeitet
werden. Im wesentlichen handelt es sich dabei um miteinander verpreßte Alu-PVC-Abfallfolien und vereinzelt
auch um reine Alu-Abfallfolien und reine PVC-Abfallfolien.

Wegen der relativ großen Empfindlichkeit des PVC gegenüber Hitze und Licht kann es notwendig sein, das PVC-
Bindemittel vor der Verarbeitung zu stabilisieren. Das
gilt auch, wenn dem PVC-Bindemittel Alu-PVC-Füllstoffgranulat zugemischt wird. Das PVC der Alu-PVC-Abfallfolien der Pharmaindustrie ist in der Regel Sn/S-stabilisiert. Vorzugsweise wird für das PVC-Bindemittel
ebenfalls eine Sn/S-Stabilisierung gewählt.

Als Alternative bietet sich eine Ca/Zn-Stabilisierung an. Die Grundmischung hierbei besteht aus 100 Teilen S-PVC, 0,3 Teilen Zinnstabilisator, 0,5 Teilen innerem Gleitmittel (Ca-Basis) und 0,2 bis 1 Teil äußerem Gleitmittel. Hierbei kann es sich um Paraffin oder niedermolekularem Polyäthylen mit Molekulargewichten zwischen 1000 und 3500 handeln.

Als weitere Stabilisierungsart kann eine Bleistabilisierung genannt werden, wobei durch die im Alu-PVC-Füllstoffgranulat vorhandenen Schwefelreste der Sn/S-Stabilisierung eine Verbindung von Blei mit Schwefel dazu führt, daß eine dunkelbraune Verfärbung eintritt.

Ebenso kann eine Ba/Cd-Stabilisierung gewählt werden, wobei durch die Bildung von BaS bzw. CdS ebenfalls Verfärbungen eintreten.

Außer Alu-PVC-Abfallfolien fallen bei der Pharma-Industrie im geringeren Maße auch Alu-PVC/PVDC-Folien an. Außerdem gibt es Deckfolien, die nicht nur aus Alu- sondern aus Alu-Pergamin oder Alu-Chrompapier bestehen. Es gibt auch Alu-Verbundfolien mit einem Kraftpapier.

Alu-PVC/PVDC-Abfallfolien können in geringen Anteilen bis etwa 10 % in einem Alu-PVC-Füllstoff vorhanden sein, ohne daß dabei die Herstellung von erfindungsgemäßen Preßplatten leidet. Papierhaltige Abfallfolien sind jedoch von dem Alu-PVC-Füllstoff fernzuhalten. Alu-PVC/ PVDC-Abfälle sind im Zusammenhang mit Extrudier- und Spritzgußverfahren bei einem Alu-PVC-Füllstoff nicht verwendbar. Es ist daher zweckmäßig, die Alu-PVC-Abfallfolien von den übrigen Folien möglichst getrennt zu halten, die ohnehin nur in geringen Mengen anfallen.

In den Zeichnungen sind in schematischer Weise Ausführungsbeispiele nach der Erfindung dargestellt.

Fig. 1 zeigt einzelne Teilchen zerkleinerter Alu-PVC-Abfallfolien. Die Teilchen 1 bestehen aus Alu-Folienteilchen 2, die mit PVC-Folienteilchen 2' fest verbunden sind. Die Teilchen 3 bestehen aus reinen Alu-Folienteilchen und die Teilchen 4 bestehen aus reinen PVC-Folienteilchen.

Fig. 2 zeigt ein aus Alu-PVC-Abfallfolien hergestelltes Granulat in körniger Form. Die einzelnen Granulatteilchen 5 aus PVC enthalten einzelne Alu-Folienteilchen 5' eingeschlossen.

Fig. 3 zeigt einen Querschnitt durch einen Teil 6 eines unter Verwendung von Alu-PVC-Abfallfolien hergestellten Kunststoffkörpers. In dem Querschnitt bestehen die Bruchstücke 7 aus Alu-Folienteilchen. Die Punkte 8 sollen die PVC-Masse kennzeichnen, in der die Alu-Folienteilchen 8 eingeschlossen sind.

Fig. 4 zeigen beispielsweise Kunststoffkörper, die mehr bis 13 oder weniger Alu-PVC-Abfallfolien enthalten:

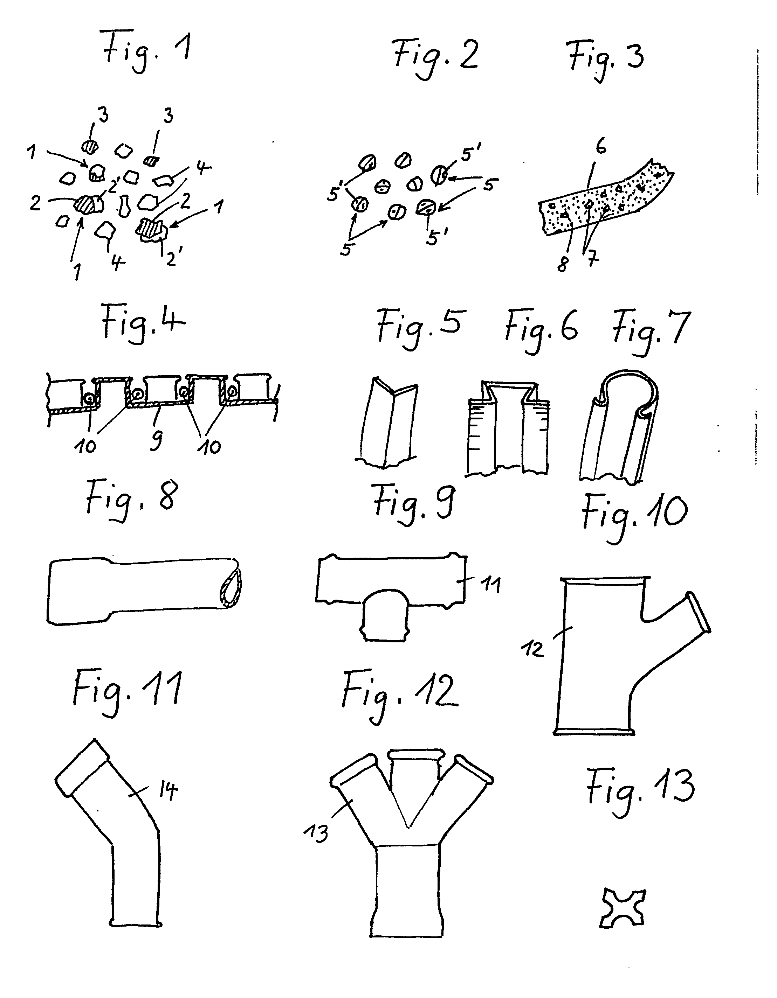

Fig. 4 zeigt einen Querschnitt durch eine Fußbodenplatte 9 für Flächenheizungen. Mit 10 sind Kabelquerschnitte bezeichnet.

Fig. 5 zeigen beispielsweise Profile, bis 7

Fig. 8 zeigt ein Kunststoffrohr,

Fig. 9, betreffen einen Fitting 11, eine einfache Rohrab-10 und zweigung 12 und eine mehrfache Rohrverzeigung 13. 11

Fig. 12 zeigt ein abgewinkeltes Rohrteil und

Fig. 13 zeigt einen Kabelabstandshalter.

Die Erfindung ist in keiner Weise auf die in den Fig. 4 bis 13 gezeigten Ausführungsbeispiele beschränkt. Dem Kunststoff-Fachmann ist ohne weiteres klar, daß sich die Ausführungsbeispiele durch beliebig viele Kunststoffkörper ergänzen ließen, die als Füllstoff erfindungsgemäß aufbereitete Alu-PVC-Abfallfolien enthalten können.

A n s p r ü c h e

1. Verwendung von Alu-PVC-Abfallfolien, insbesondere der Pharmaindustrie, zur Herstellung von Füllstoffen für Kunststofformkörper.

2. Kunststofformkörper nach Anspruch 1, der wenigstens einen Füllstoff enthält, dadurch gekennzeichnet, daß der Füllstoff aus zerkleinerten Alu-PVC-Abfallfolien besteht.

3. Verfahren zur Herstellung der Kunststofformkörper nach Anspruch 1 oder 2, dadurch gekennzeichnet, daß die Alu-PVC-Abfallfolien zerkleinert, das zerkleinerte Füllstoff-Produkt mit wenigstens einem Thermoplast als Bindemittel gemischt und das Gemisch in einer Warm- oder Kaltpresse zu Platten verpreßt wird.

4. Verfahren zur Herstellung der Kunststofformkörper nach Anspruch 1 oder 2, dadurch gekennzeichnet, daß die Alu-PVC-Abfallfolien zerkleinert, das zerkleinerte Füllstoff-Produkt mit einem Thermoplast als Bindemittel, einem Weichmacher und wenigstens einem Verarbeitungshilfsmittel gemischt und aus dem Mischgut ein Walzfell hergestellt wird, und daß das Walzfell zerkleinert und anschließend zu Platten verpreßt wird.

5. Verfahren zur Herstellung der Kunststofformkörper nach Anspruch 1 oder 2, dadurch gekennzeichnet, daß die Alu-PVC-Abfallfolien zerkleinert und das zerkleinerte Gut mit oder ohne Bindemittel in der Schmelzphase homogenisiert, entgast und anschließend granuliert wird, und daß das so erhaltene Alu-PVC-Füllstoff-Granulat mit wenigstens einem Thermoplast als Bindemittel gemischt und das Gemisch als Rohstoff zum Extrudieren oder Spritzgießen der Kunststoffe oder zur Herstellung von Folien verwendet wird.

6. Verfahren nach einem der vorstehenden Ansprüche 3 bis 5, dadurch gekennzeichnet, daß als Bindemittel, insbesondere in Pulver- oder Granulatform, PVC, Polyester, Polyäthylen, Polystyrol oder Polyurethan verwendet wird.

7. Verfahren nach einem der vorstehenden Ansprüche 3 bis 5, dadurch gekennzeichnet, daß zusätzlich zu dem Füllstoff aus Alu-PVC-Abfallfolien wenigstens ein zusätzlicher organischer (Holzmehl, Holzspäne), anorganischer (Gesteins-, Quarz- oder Keramikmehl) oder metallischer Füllstoff (Al-Pulver) verwendet wird.

9. Verfahren nach Anspruch 5 zur Herstellung von extrudierten Bauprofilen, Rohren, Stangen, Leisten und dergleichen oder von Folien, dadurch gekennzeichnet, daß der Anteil an Alu-PVC-Abfallfolien-Füllstoff bis zu etwa 60 Gew.-% beträgt.

10. Verfahren nach Anspruch 5 zur Herstellung von spritzgegossenen Formstücken und Formteilen, wie z.B. Abstandshalter für Rohre und Kabel, für Bewehrungsmatten, Spreizkörper für Schalungen, Fittings für Rohrleitungen, Rohrverzweigungen, Muffen, dadurch gekennzeichnet, daß der Anteil an Alu-PVC-Abfallfolien-Füllstoff bis zu etwa 50 Gew.-% beträgt.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-A-2 615 610 (TOPPAN PRINTING) * Ansprüche 1-5,8; Seite 4, Zeilen 7-18; Seite 10, Zeile 28 - Seite 11, Zeile 4; Seite 12, Zeile 25 - Seite 13, Zeile 17; Seite 21, Zeilen 10-36; Beispiel 3 * | 1-3,5-9 | C 08 K 3/08 B 29 C 29/00 C 08 J 11/04 |
| | --- | | |
| Y | CHEMICAL ABSTRACTS, Band 86, Nr. 6, 1977, Seite 32, Nr. 30520n, Columbus, Ohio, USA & JP - A - 76 22037 (DAIDO OXYGEN CO., LTD. SANWA K.K.) 07-07-1976 * Zusammenfassung * | 1,2 | |
| | --- | | |
| A | CHEMICAL ABSTRACTS, Band 91, Nr. 6, 1979, Seite 194, Nr. 42552r, Columbus, Ohio, USA & JP - A - 79 10274 (SATO SUGURE) 25-01-1979 * Zusammenfassung * | 1 | **RECHERCHIERTE SACHGEBIETE (Int. Cl. ³)** |
| | --- | | |
| A | US-A-3 671 615 (H.K. PRICE) * Ansprüche 1,2,4; Spalte 2, Zeilen 1-27 * | 1,2-4,6 | B 29 C C 08 J C 08 K C 08 L |
| | ----- | | |

Der vorliegende Recherchenbericht wurde für alle Patentansprüche erstellt.

| Recherchenort DEN HAAG | Abschlußdatum der Recherche 18-06-1982 | Prüfer HALLEMEESCH A.D. |
|---|---|---|